# EUROPÄISCHE PATENTSCHRIFT

(11) **EP 4 277 259 B1**
(45) Veröffentlichungstag und Bekanntmachung des Hinweises auf die Patenterteilung: **03.07.2024**
(21) Anmeldenummer: 22173324.9
(22) Anmeldetag: 13.05.2022
(51) Int. Cl.: G06T 5/00, G06T 7/11, G06K 7/14, G06V 10/22, H04N 23/60, H04N 23/61, H04N 23/71, G06T 5/40, G06V 10/25, G06V 10/50, G06V 10/54

(54) **AUFNEHMEN UND HELLIGKEITSANPASSUNG EINES BILDES**
IMAGE CAPTURE AND BRIGHTNESS ADJUSTMENT
CAPTURE ET AJUSTEMENT DE LA LUMINOSITÉ D'UNE IMAGE

(43) Veröffentlichungstag der Anmeldung: 15.11.2023
(73) Patentinhaber: SICK AG, 79183 Waldkirch (DE)
(72) Erfinder: Müller, Dr. Romain, 79252 Stegen (DE); Schüler, Pascal, 79331 Teningen (DE)

(56) Entgegenhaltungen:
- JP-A- 2006 024 176
- JP-A- 2015 032 966
- US-A1- 2005 103 860
- US-A1- 2017 061 237
- US-A1- 2021 248 723

## Beschreibung

Die Erfindung betrifft eine Kameravorrichtung und ein Verfahren zum Aufnehmen und zur Helligkeitsanpassung eines Bildes nach dem Oberbegriff von Anspruch 1 beziehungsweise 14.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Dank der Fortentwicklung in der Kamera- und Bildsensortechnologie werden die zu verarbeitenden Bilder immer größer. Die ungeheuren Datenmengen stellen die begrenzten Rechenkapazitäten und Bandbreiten zur Weitergabe und Verarbeitung in einer Kamera unter Echtzeitbedingungen vor Herausforderungen. Dabei unterstützt der Einsatz heterogener Rechenarchitekturen, d.h. eines Verbundes eines Mikroprozessors (CPU, Central Processing Unit) mit beispielsweise einem FPGA (Field Programmable Gate Array), einem DSP (Digital Signal Processor), einer GPU (Graphics Processing Unit) oder auch einem sogenannten Kl-Beschleuniger (NPU, Neural Processing Unit, TPU, Tensor Processing Unit).

Besonders bewährt hat sich hier die Kombination mit einem FPGA, das für das Auslesen der Bilddaten aus dem Bildsensor zuständig ist. Das FPGA ist zudem über eine Hochgeschwindigkeitsschnittstelle (PCI, Peripheral Component Interconnect, PCIE, PCI Express, MIPI, Mobile Industry Processor Interface) mit einem Speicher des Mikroprozessors verbunden. So werden die Bilddaten über DMA (Direct Memory Access) vom FPGA in den Speicher übertragen. Dieser Prozess des Auslesens und Speicherns wird als Streaming bezeichnet. Der mittels CPU implementierte Decoder kann dann nachgelagert auf die gespeicherten Bilder zugreifen und die Codes auslesen. Der Streaming-Ansatz ist mit anderen oben genannten Zusatzbausteinen einer heterogenen Architektur nicht ohne Weiteres möglich, die in der Regel schon selbst eines gespeicherten Bildes bedürften, während das FPGA Bilddaten direkt pixelweise auslesen und weiterverarbeiten kann.

Die Bilddaten werden vorzugsweise schon unmittelbar, on-the-fly, im FPGA vorverarbeitet, und dabei können mit den Bilddaten Zusatzinformationen oder Metadaten für den Mikroprozessor gespeichert werden. Typische Vorverarbeitungsschritte betreffen die Binarisierung, mit der aus einem Grauwertbild ein Schwarz-Weiß-Bild wird, oder die Segmentierung, in der interessierende Bereiche (ROI, Region of Interest) mit Codekandidaten aufgefunden werden. So beschreibt die EP 2 003 599 A1 einen optoelektronischen Sensor und ein Verfahren zur Erfassung von Codes, in dem ein Binarisierer für eine Umwandlung eines Farb- oder Grauwertbildes in ein Binärbild bereits während des Empfangs und/oder in Echtzeit ausgebildet ist, indem ein jeweils eingelesener Abschnitt binarisiert wird, noch während die weiteren Abschnitte eingelesen werden. Die EP 2 555 160 B1 findet in einer Vorverarbeitung auf einem FPGA interessierende Bereiche oder Codekandidaten anhand eines Kontrastmaßes. In der EP 3 916 633 A1 werden erste Schichten eines neuronalen Netzes zu Segmentierung schon während des Einlesens auf einem FPGA durchlaufen. Die EP 1 365 577 A1 offenbart ein Verfahren zum Betrieb eines optoelektronischen Sensors, in dem ein Bild bereits während des Empfanges komprimiert wird. Dabei wird jeweils die Fähigkeit des FPGAs ausgenutzt, viele einfache Rechenoperationen wie beispielsweise Matrixmultiplikationen parallel in Echtzeit auszuführen. Sequentielle, komplexere Rechenoperationen wie diejenigen eines Decoders zum Lesen optischer Codes bleiben dem Mikroprozessor vorbehalten, der dafür auf die bereitgestellten Bilddaten und mögliche Vorverarbeitungsergebnisse zurückgreift

Eine hilfreiche Vorverarbeitung ist die sogenannte Kontrastspreizung. Sie verbessert nachgelagerte Bildverarbeitungen, insbesondere das Lesen von Codes, wenn der Helligkeits- oder Grauwertebereich bei der Bildaufnahme nicht ausgenutzt wird. Mögliche Ursachen dafür sind Unterbelichtung, ein dunkler Hintergrund oder im Falle von Codes auch schlechter Druck. Bei der Kontrastspreizung werden die aufgenommenen Helligkeitswerte auf den verfügbaren Dynamik- oder Grauwertebereich von beispielsweise acht Bit reskaliert oder gespreizt. Problematisch ist, dass für die Kontrastspreizung die Helligkeitsverteilung bekannt sein muss, und dies ist sehr rechenintensiv, weil auf die einzelnen Pixel zugegriffen werden muss. Nun könnte hier prinzipiell das FPGA einspringen und die Helligkeitsverteilung effizient bestimmen. Das wäre dann jedoch eine globale Helligkeitsverteilung, auf deren Basis eine Kontrastspreizung für heterogene Bilder mit hellen und dunklen Regionen wenig nutzt. Gerade beim Codelesen ist es aber sogar der Regelfall, dass die interessierenden Bereiche helle Etiketten vor dunklen Hintergründen eines Objekts mit den Etiketten oder eines Förderbandes sind. Nur eine auf einen interessierenden Bereich beschränkte Kontrastspreizung könnte hier wirklich zu einer Verbesserung führen, aber dafür kann eine globale Helligkeitsverteilung nicht herangezogen werden.

Die EP 0 366 099 B1 offenbart eine recheneffiziente Technik für eine Bildkontrastverbesserung. Dabei wird ein Histogramm aus den Helligkeitswerten der Pixel und daraus eine Transferfunktion gebildet, mit der dann die ursprünglichen Helligkeitswerte angepasst werden. Die EP 1 359 746 A1 befasst sich mit einer Bildverarbeitungsvorrichtung, die ebenso ein Histogramm aufbaut, um kleinste und größte Helligkeitswerte aufzufinden und auf dieser Basis das Bildsignal zu spreizen. Damit wird jeweils nur eine globale Kontrastspreizung erreicht. Die EP 3 495 987 B1 beschreibt ein Verfahren zum Lesen von Barcodes, bei dem der Kontrast lokal aus Histogrammen einer Nachbarschaft angepasst wird. Dazu wiederum ist erforderlich, immer wieder mit hohem Aufwand lokale Histogramme für das jeweils zu korrigierende Pixel zu erzeugen.

Die Arbeit von Zhuang, Liyun, und Yepeng Guan, "Image enhancement via subimage histogram equalization based on mean and variance", Computational intelligence and neuroscience 2017 (2017) beschreibt ein Verfahren, bei dem ein Histogramm eines Eingangsbildes in vier Teile aufgeteilt wird. Diese Unterteilung betrifft das Histogramm, nicht das Eingangsbild, und ermöglicht damit keine lokale Kontrastspreizung.

Aus der US 2017/0061237 ist eine Bildverarbeitungsvorrichtung bekannt, die eine Helligkeitsanpassung vornimmt. In dem Bild werden Bereiche wie ein Himmel und ein Hintergrund sowie ein Hauptmotiv identifiziert. Daraus werden Gewichtungskoeffizienten für die Helligkeitsanpassung abgeleitet, die das Hauptmotiv verstärkt berücksichtigen sollen.

Es ist daher Aufgabe der Erfindung, eine Helligkeitsanpassung für ein aufgenommenes Bild zu verbessern.

Diese Aufgabe wird durch eine Kameravorrichtung und ein Verfahren zum Aufnehmen und zur Helligkeitsanpassung eines Bildes nach Anspruch 1 beziehungsweise 14 gelöst.

Ein Bildsensor nimmt ein Bild beziehungsweise Bilddaten mit einer Vielzahl von Pixeln auf, typischerweise hochaufgelöst mit einem Zeilensensor mit mehreren Kilopixel oder einem Matrixsensor mit mehreren Megapixel. Eine Steuer- und Auswertungseinheit unterteilt das Bild in eine Vielzahl von ersten Teilbereichen. Diese Unterteilung ist eine a-priori-Unterteilung in erste Teilbereiche einer vorgegebenen Position und Geometrie, unabhängig vom Bildinhalt, insbesondere in einem festen Raster gleich großer Rechtecke mit n x m Pixeln. Die ersten Teilbereiche werden im Folgenden immer wieder synonym als Kacheln bezeichnet. Das Bild wird beispielsweise in mindestens fünf, mindestens zehn oder noch mehr Kacheln je Zeile beziehungsweise Spalte aufgeteilt.

Außerdem wird in dem Bild ein zweiter Teilbereich mit interessierenden Strukturen aufgefunden. Derartige interessierende Strukturen können Objekte, Etiketten, optische Codes, Beschriftungen und weitere Bildinhalte sein, die für die Anwendung der Kameravorrichtung von Interesse sind. Im Gegensatz zu der Unterteilung in erste Teilbereiche hängen Position und Geometrie des zweiten Teilbereichs demnach vom Bildinhalt ab. Die zweiten Teilbereiche sind interessierende Bereiche (ROI, Region of Interest) und werden im Folgenden immer wieder synonym so bezeichnet. Ob es einen oder mehrere zweite Teilbereiche gibt, hängt von der aktuellen Szenerie bei der Bildaufnahme ab.

Wenn es in einem Bild überhaupt keine zweiten Teilbereiche gibt, kann die weitere Verarbeitung dieses Bildes abgebrochen werden. Das Auffinden des zweiten Teilbereichs oder der zweiten Teilbereiche entspricht der einleitend diskutierten Segmentierung, und dafür sind alle an sich bekannten Segmentierungsverfahren einsetzbar.

Die Steuer- und Auswertungseinheit nimmt ferner eine Helligkeitsanpassung des Bildes vor, insbesondere eine Kontrastspreizung. Die Erfindung geht dabei von dem Grundgedanken aus, die Helligkeitsanpassung nicht für das gesamte Bild, sondern für den zweiten Teilbereich oder die zweiten Teilbereiche beziehungsweise die interessierenden Bereiche vorzunehmen. Dazu wird zu den ersten Teilbereichen oder Kacheln jeweils eine Helligkeitsverteilung bestimmt. Nach diesem Schritt sind eine Vielzahl von lokalen Helligkeitsverteilungen bekannt.

Es wird eine Auswahl derjenigen ersten Teilbereiche ermittelt, die dem zweiten Teilbereich entsprechen. Anschaulicher gesprochen sind das diejenigen Kacheln, die einen interessierenden Bereich überdecken. Es treten dabei in der Regel Randeffekte auf, weil ein Rand des zweiten Teilbereichs nicht oder jedenfalls nicht überall von einem ersten Teilbereich abgedeckt ist, beziehungsweise umgekehrt ein erster Teilbereich den Rand des zweiten Teilbereichs überragt. Hier ist wahlweise eine zu großzügige Überdeckung mit zu vielen Kacheln oder eine sparsame Überdeckung mit zu wenigen Kacheln denkbar, oder auch eine Mischform, die einen Teil des Randes überragt und einen anderen Teil des Randes auslässt.

Die Helligkeitsverteilungen der getroffenen Auswahl von ersten Teilbereichen entsprechend dem zweiten Teilbereich werden zu einer gemeinsamen Helligkeitsverteilung kombiniert. Dadurch entsteht eine gemeinsame Helligkeitsverteilung des zweiten Teilbereichs, ohne dass aber hierfür die einzelnen Helligkeitswerte der Pixel nochmals berücksichtigt werden müssten. Das Zusammenführen der einzelnen Helligkeitsverteilungen geschieht auf einer abstrakteren Ebene und ist daher mit deutlich geringerem Rechenaufwand verbunden. Mit der gemeinsamen Helligkeitsverteilung wird dann die Helligkeitsanpassung für den zweiten Teilbereich vorgenommen. Vorzugsweise findet außerhalb des zweiten Teilbereichs keine Helligkeitsanpassung statt, und jedenfalls liegt der Helligkeitsanpassung in dem zweiten Teilbereich eine dazu passende gemeinsame Helligkeitsverteilung und nicht etwa eine globale Helligkeitsverteilung über das ganze Bild zugrunde. Im Falle mehrerer zweiter Teilbereiche im selben Bild werden vorzugsweise die entsprechenden Schritte für die weiteren zweiten Teilbereiche wiederholt. Die Helligkeitsverteilungen zu den ersten Teilbereichen müssen aber nur einmalig bestimmt werden, sie können jeweils neu zu anderen gemeinsamen Helligkeitsverteilungen des jeweiligen zweiten Teilbereichs kombiniert werden.

Die Erfindung hat den Vorteil, dass eine lokale Helligkeitsanpassung oder Kontrastspreizung ermöglicht wird, die sich nur auf interessierende Bereiche bezieht. Diese Kontrastspreizung ist besonders recheneffizient, weil die Helligkeitsverteilungen zu den einzelnen Kacheln nur ein einziges Mal bestimmt werden müssen und dieser Vorgang zudem unabhängig von den interessierenden Bereichen ist und daher ausgelagert beziehungsweise parallel abgearbeitet werden kann. Das Kombinieren von Helligkeitsverteilungen zu den ausgewählten Kacheln zu einer gemeinsamen Helligkeitsverteilung zu dem interessierenden Bereich ist nicht rechenintensiv, dazu müssen die einzelnen Pixelwerte in dem interessierenden Bereich nicht erneut berücksichtigt werden. Die erfindungsgemäße Helligkeitsanpassung kommt einer lokalen Kontrastspreizung, die jeweils passgenau Helligkeitsverteilungen genau für einen interessierenden Bereich bestimmt, durch die Auswahl der Kacheln zumindest sehr nahe und vermeidet dabei den hohen Rechenaufwand einer solchen passgenauen lokalen Kontrastspreizung. Dabei sind Implementierungen möglich, die sich auf die Laufzeit so gut wie nicht auswirken und die daher die Echtzeitfähigkeit auch ohne teure Rechenbausteine nicht in Frage stellen. Eine Helligkeitsanpassung oder Kontrastspreizung an sich ist für viele nachträgliche Bildverarbeitungen von Vorteil, etwa Kantendetektion und Binarisierung insbesondere in Vorbereitung eines Codelesens.

Die Steuer- und Auswertungseinheit ist bevorzugt dafür ausgebildet, bei der Auswahl von ersten Teilbereichen, die dem zweiten Teilbereich entsprechen, die ersten Teilbereiche auszuwählen, die zu einem vorgegebenen Mindestanteil mit dem zweiten Teilbereich überlappen. Damit wird für die Zuordnung von Kacheln zu einem interessierenden Bereich ein lokal pro Kachel und sehr einfach prüfbares Kriterium angegeben, das auch den Umgang mit den oben schon diskutierten Rändern des interessierenden Bereichs eindeutig bestimmt. Der Mindestanteil ist vorzugsweise als ein Prozentsatz der Pixelzahl in einer Kachel und damit Flächenanteil angegeben und ist ein Parameter, der entsprechend einer großzügigen oder sparsamen Überdeckung des interessierenden Bereichs mit Kacheln gewählt werden kann.

Die Steuer- und Auswertungseinheit ist bevorzugt dafür ausgebildet, parallel jeweilige Helligkeitsverteilungen zu den ersten Teilbereichen zu bestimmen und einen zweiten Teilbereich mit interessierenden Strukturen aufzufinden. Im Zuge der Bestimmung von Helligkeitsverteilungen zu den Kacheln können auch die Kacheln selbst gebildet werden. Es ist überhaupt nur möglich, die interessierenden Bereiche parallel dazu aufzufinden, weil die beiden Schritte unabhängig voneinander sind. Die interessierenden Bereiche müssen vorab noch nicht bekannt sein, denn die Helligkeitsverteilungen beziehen sich zunächst auf die Kacheln. Die Zuordnung findet erst im Anschluss an diese parallele Verarbeitung statt, wenn Kacheln dem interessierenden Bereich zugeordnet werden. Die aufwändige Bestimmung der Helligkeitsverteilungen ist dann schon nebenher abgearbeitet, erforderlich ist nur noch der unaufwändige Schritt, die gemeinsame Helligkeitsverteilung aus den einzelnen Helligkeitsverteilungen zu den entsprechend dem interessierenden Bereich ausgewählten Kacheln zu bilden.

Die Steuer- und Auswertungseinheit ist bevorzugt dafür ausgebildet, die Helligkeitsverteilungen zu den ersten Teilbereichen als Histogramme zu ermitteln, insbesondere zum Erzeugen der gemeinsamen Helligkeitsverteilung ein gemeinsames Histogramm als Summe der Histogramme zu der Auswahl der ersten Teilbereiche zu bilden. Helligkeitsverteilungen werden in dieser Ausführungsform als Histogramme repräsentiert. Ein Histogramm kann den Dynamikbereich mit höchster Feinheit auflösen, das entspricht dann einer Binbreite von Eins, beispielsweise 256 Bins bei 8-Bit-Grauwerterfassung des Bildsensors. Alternativ werden breitere Bins gewählt, beispielsweise jeweils vier benachbarte Graustufen in einem Bin zusammengefasst, womit dann 64 Bins für einen 8-Bit-Grauwert ausreichen und sich die Counts zu den Bins entsprechend den breiteren Bins erhöhen. Es ist besonders einfach, aus den Histogrammen zu den Kacheln ein gemeinsames Histogramm des interessierenden Bereichs zu bilden, indem die Counts je Bin aufaddiert werden. Auch in anderen Repräsentationen der Helligkeitsverteilung ohne Histogramme ist es aber mit wenigen einfachen Rechenschritten möglich, die jeweiligen Häufigkeiten in der gemeinsamen Helligkeitsverteilung zu kumulieren und die gemeinsame Helligkeitsverteilung gegebenenfalls neu zu normieren.

Die Steuer- und Auswertungseinheit ist bevorzugt dafür ausgebildet, zur Helligkeitsanpassung eine Spanne von Helligkeiten der gemeinsamen Helligkeitsverteilung auf eine größere Spanne möglicher Helligkeitswerte des Bildes aufzuspreizen, insbesondere durch lineares Reskalieren der Helligkeitswerte. Die Helligkeitsanpassung ist dann eine Kontrastspreizung. Die tatsächlich vorkommenden Helligkeitswerte werden auf eine größere Spanne oder einen größeren Anteil der möglichen Helligkeitswerte reskaliert. Es kann auf den gesamten verfügbaren Dynamikbereich aufgespreizt oder ein Randbereich weggelassen werden. Beispielsweise kann bei einer 8-Bit-Grauwertaufösung auf Werte von 0...255 oder nur von i... (255-j) gespreizt werden, wobei i, j kleine natürliche Zahlen sind, etwa i=j=15. Die Reskalierung ist vorzugsweise linear.

Die Steuer- und Auswertungseinheit ist bevorzugt dafür ausgebildet, die Spanne von Helligkeiten der gemeinsamen Helligkeitsverteilung anhand eines kleinsten und größten vorkommenden Helligkeitswerts der Helligkeitsverteilung zu bestimmen. Das ist eine sehr einfache Möglichkeit, die Spanne der tatsächlich vorkommenden Helligkeitswerte zu ermitteln. Es ergibt sich ein kleinster vorkommender Helligkeitswert MinGrau und ein größter vorkommender Helligkeitswert MaxGrau, und das Intervall [MinGrau, MaxGrau] kann dann auf ein größeres Intervall wie [i, 255-j] aufgespreizt werden. Vorzugsweise werden vor der Bestimmung des kleinsten und größten vorkommenden Helligkeitswerts Bins mit einem besonders geringen Count auf Null gesetzt, damit nicht einzelne oder wenige verrauschte Pixel mit extremen Grauwerten das Ergebnis verzerren. Zusätzlich oder alternativ können aus ähnlichen Gründen vorab einige dunkelste und hellste Bins auf Null gesetzt werden, beispielsweise insgesamt 5%, 10% oder 20% der Ränder der Helligkeitsverteilung.

Die Steuer- und Auswertungseinheit ist bevorzugt dafür ausgebildet, die Spanne von Helligkeiten der gemeinsamen Helligkeitsverteilung anhand von Maxima oder Peaks der Helligkeitsverteilung zu bestimmen. Das ist besonders vorteilhaft für das Lesen optischer Codes, bei denen ein dunkler und ein heller Peak erwartet wird und es gerade auf diesen binären Kontrast zwischen dunkel und hell ankommt. Die Spanne muss sich nicht unmittelbar aus der Lage der Peaks ergeben, sondern kann noch verengt oder besser erweitert werden. Außerdem ist denkbar, einen besonders hellen Peak zu verwerfen, etwa bei einer 8-Bit-Grauwertauflösung in einem Bereich oberhalb eines Werts von 240, 245, 250 oder 252, denn es handelt sich vermutlich um einen uninteressanten Glanzreflex, insbesondere dann, wenn es noch einen zusätzlichen etwas weniger hellen Peak und einen dunklen Peak gibt. Die Helligkeitsverteilung kann vor dem Auffinden von Peaks geglättet werden, beispielsweise mit einem Gaussfilter. Es ist denkbar, das Vorgehen des Vorabsatzes hinzuzunehmen und die Werte MinGrau, MaxGrau bei der Festlegung der Spanne zu berücksichtigen, beispielsweise die Grenzen der Spanne zwischen MinGrau und einen dunklen Peak beziehungsweise MaxGrau und einen hellen Peak zu legen, insbesondere in die jeweilige Mitte.

Die Steuer- und Auswertungseinheit weist bevorzugt eine erste Verarbeitungseinheit auf, die für die Unterteilung des Bildes in erste Teilbereiche und die Bestimmung der jeweiligen Helligkeitsverteilungen zu den ersten Teilbereichen zuständig ist. Bei diesen beiden Schritten sind zahlreiche Pixelzugriffe bei eher einfachen Operationen erforderlich. Die erste Verarbeitungseinheit weist dafür bevorzugt ein FPGA (Field Programmable Gate Array) auf. Ein FPGA ist besonders geeignet zum Streamen von Bilddaten sowie für eine Echtzeitverarbeitung großer Datenmengen mit vielen, vergleichsweise einfachen einzelnen Rechenoperationen. Die auf der ersten Verarbeitungseinheit implementierten Schritte sind nicht zwingend auf das Bilden von Kacheln und Erzeugen zugehöriger Helligkeitsverteilungen beschränkt. Insbesondere kann die erste Verarbeitungseinheit auch noch für das Auffinden der zweiten Teilbereiche zuständig sein. Dafür kann bevorzugt ein Kontrastmaß gebildet werden, denn gerade interessierende Bereiche mit optischen Codes unterscheiden sich durch hohen Kontrast von eher homogenem Hintergrund. Die Segmentierung mit Auffinden interessierender Bereiche ist an sich bekannt, es wird ergänzend auf die einleitend hierzu genannten Dokumente verwiesen. Die interessierenden Bereiche können alternativ auf ganz andere Weise aufgefunden werden, etwa durch 3D-Geometrievermessung mit einem weiteren Sensor, insbesondere Laserscanner, oder mit der Kameravorrichtung selbst, um beispielweise Objekte vom Hintergrund zu unterscheiden.

Die Kameravorrichtung weist bevorzugt einen Speicher zum Ablegen von Bilddaten auf, wobei die erste Verarbeitungseinheit zum Übertragen von Bilddaten des Bildes von dem Bildsensor in den Speicher in einem Bilddatenstrom ausgebildet ist. Das Einlesen und Speichern von Bilddaten als Bilddatenstrom vorzugsweise in Gruppen benachbarter Pixel wird als Streaming bezeichnet. Insbesondere liest die erste Verarbeitungseinheit jeweils eine Bildzeile oder einen Teil davon aus dem Bildsensor aus und legt sie in dem Speicher ab. Das Bild wird demnach zeilenweise von dem Bildsensor eingelesen beziehungsweise gestreamt, und die Verarbeitung erfolgt zeilenorientiert. Für Vorverarbeitungen, die mehr als eine Bildzeile betreffen, kann die erste Verarbeitungseinheit einen Bildpuffer aufweisen, in dem rollierend eine entsprechende Anzahl Bildzeilen zwischengespeichert wird. Für das Bestimmen der Kacheln und zugehörigen Helligkeitsverteilungen ist ein Bildpuffer nicht unbedingt erforderlich. Prinzipiell kann in gleicher Weise statt mit Bildzeilen auch mit Bildspalten gearbeitet werden. Das wird hier lediglich als Unterschied in der Definition der Koordinaten aufgefasst und nicht unterschieden.

Die erste Verarbeitungseinheit ist bevorzugt dafür ausgebildet, jeweils von dem Bildsensor eingelesene Bilddaten bei der Übertragung in den Speicher schon zu verarbeiten, noch während weitere Bilddaten von dem Bildsensor eingelesen werden. Die erste Verarbeitungseinheit ist somit für eine Vorverarbeitung "on-the-fly" beziehungsweise schon während des Streamens ausgebildet. Es werden entsprechend verarbeitete Bilddaten beziehungsweise bei der Vorverarbeitung gewonnene Zusatzinformationen oder Metadaten gespeichert. Diese Vorverarbeitung erfolgt gleichsam direkt an der Quelle und noch bevor eine nachgelagerte Bildverarbeitung, insbesondere ein Decoder zum Lesen optischer Codes, überhaupt Zugriff auf die Bilddaten erhalten hat. Die Vorverarbeitung betrifft vorzugsweise das Unterteilen in Kacheln beziehungsweise die Bestimmung von zugehörigen Helligkeitsverteilungen, möglicherweise auch das Auffinden von interessierenden Strukturen oder bereits interessierenden Bereichen, insbesondere eine Beurteilung des jeweiligen Kontrasts oder die Bestimmung von Hilfsgrößen wie Mittelwert und Varianz zur späteren Beurteilung des Kontrasts.

Die Steuer- und Auswertungseinheit ist bevorzugt dafür ausgebildet, den Inhalt eines optischen Codes in dem zweiten Teilbereich zu lesen. Die Kameravorrichtung wird damit zu einem kamerabasierten Codeleser. Die interessierenden Strukturen sind in diesem Fall optische Codes, beispielsweise Barcodes oder 2D-Codes nach einem beliebigen Standard. Die Bildinhalte eines interessierenden Bereichs werden einem Decoder zugeführt, der mit mindestens einem an sich bekannten und daher hier nicht näher erläuterten Verfahren versucht, den Inhalt des optischen Codes auszulesen.

Die Steuer- und Auswertungseinheit weist bevorzugt eine zweite Verarbeitungseinheit auf, insbesondere einen Mikroprozessor (CPU). Wie bereits erwähnt, ist die erste Verarbeitungseinheit und insbesondere ein FPGA besonders geeignet zum Streamen sowie für eine Echtzeitverarbeitung großer Datenmengen mit vergleichsweise einfachen einzelnen Rechenoperationen. Eine CPU dagegen ist viel flexibler und von sich aus zu komplexeren Rechenschritten in der Lage, und das ist für eine nachgelagerte Bildverarbeitung von Vorteil.

Die zweite Verarbeitungseinheit ist bevorzugt dafür ausgebildet, die helligkeitsangepassten Bilddaten des zweiten Teilbereichs zu verarbeiten, insbesondere den Inhalt optischer Codes in dem zweiten Teilbereich zu lesen. Die zweite Verarbeitungseinheit nutzt also das Ergebnis der erfindungsgemäßen Helligkeitsanpassung für die eigentliche Bildauswertung. Sie kann dazu auf die von der ersten Verarbeitungseinheit in den Speicher gestreamten und vorverarbeiteten Bilddaten einschließlich möglicher Metadaten zugreifen. Vorzugsweise erfolgt auch das Bestimmen von passenden Kacheln zu einem interessierenden Bereich sowie das Kombinieren der Helligkeitsverteilungen dieser Kacheln zu der gemeinsamen Helligkeitsverteilung in der zweiten Verarbeitungseinheit. Alternativ erledigt auch diesen Schritt die erste Verarbeitungseinheit beziehungsweise beide Verarbeitungseinheiten teilen sich diese Aufgabe.

Die Steuer- und Auswertungseinheit ist bevorzugt dafür ausgebildet, anhand der gemeinsamen Helligkeitsverteilung eine Nachschlagtabelle für die Helligkeitsanpassung zu erzeugen, die ursprünglichen Helligkeitswerten angepasste Helligkeitswerte zuordnet. Eine solche Nachschlagtabelle (LUT, LookUp Table) enthält somit für die vorkommenden Helligkeitswerte die zugehörigen helligkeitsangepassten oder kontrastgespreizten Helligkeitswerte. Insbesondere wird wie oben beschrieben ein Intervall oder eine Spanne vorkommender Helligkeitswerte, vorzugsweise linear, auf ein größeres Intervall oder eine größere Spanne möglicher Helligkeitswerte gestreckt. Die Nachschlagtabelle verkürzt die spätere Umrechnung von Helligkeitswerten auf lediglich einen Tabellenzugriff. Das Erzeugen der Nachschlagtabelle ist allgemein der Steuer- und Auswertungseinheit zugeordnet, es können in verschiedenen Ausführungsformen die erste Verarbeitungseinheit und/oder die zweite Verarbeitungseinheit dafür zuständig sein.

Die zweite Verarbeitungseinheit ist bevorzugt dafür ausgebildet, Bilddaten des zweiten Teilbereichs über die Nachschlagtabelle einzulesen. Mit einer einfachen Indirektion über die Nachschlagtabelle ist die Kontrastspreizung damit bereits erledigt. Die zweite Verarbeitungseinheit muss also keinen Pixelwert eigens für die Helligkeitsanpassung einlesen, die Helligkeitsanpassung wird mit minimalem Aufwand dann eingebunden, wenn ohnehin der vorzugsweise einzige Pixelzugriff der zweiten Verarbeitungseinheit für die eigentliche Bildverarbeitung erfolgt. Die einzulesenden Bilddaten sind vorzugsweise zuvor von der ersten Verarbeitungseinheit in den Speicher gestreamt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung der beispielhaften Montage einer Kameravorrichtung über einem Förderband;
- Fig. 2: eine schematische Darstellung einer heterogenen Architektur zur Bildauswertung und Helligkeitsanpassung mit einem FPGA als Streamer und einer CPU zur weiteren Bildverarbeitung beziehungsweise als Decoder;
- Fig. 3: ein Beispielbild mit optischen Codes, einer Unterteilung in Kacheln und einem interessierenden Bereich mit einem optischen Code; und
- Fig. 4: ein beispielhaftes Histogramm über Grauwerte in einem Bild oder Bildausschnitt zur Erläuterung einer Kontrastspreizung.

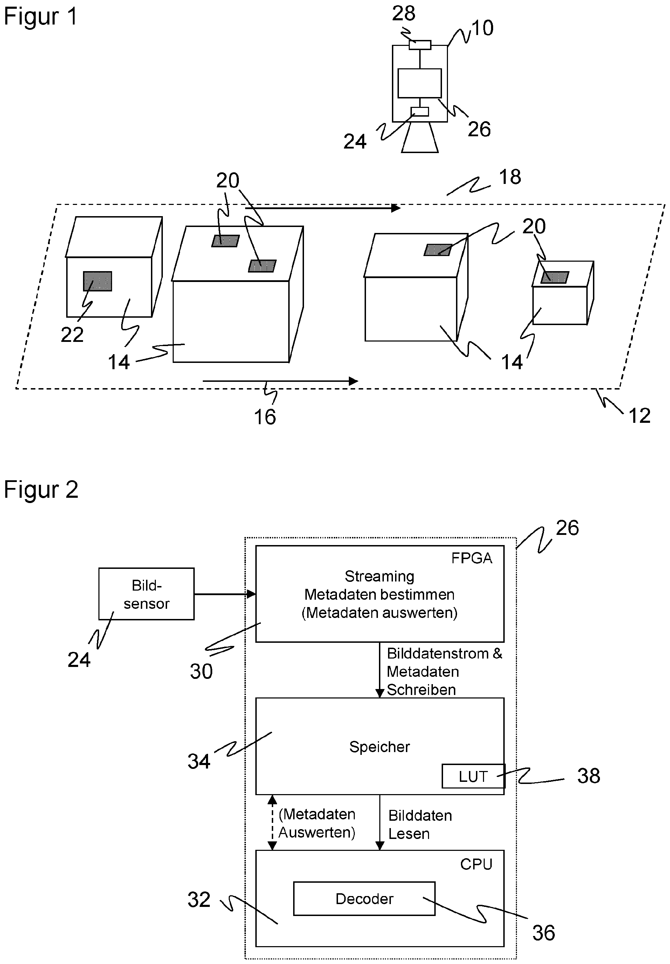

Figur 1 zeigt eine Kamera 10, insbesondere einen kamerabasierten Codeleser, die über einem Förderband 12 montiert ist, welches Objekte 14, wie durch den Pfeil 16 angedeutet, durch den Erfassungsbereich 18 der Kamera 10 fördert. Die Objekte 14 tragen in der Beispielanwendung des Codelesens an ihren Außenflächen Codes 20, die von der Kamera 10 erfasst und ausgewertet werden. Die Codes 20 können von der Kamera 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Kameras 10 aus verschiedenen Richtungen montiert sein, um eine sogenannte Omnilesung aus allen Richtungen zu ermöglichen. Diese stationäre Anwendung einer Kamera an einem Förderband 12 ist in der Praxis sehr häufig. Die Erfindung bezieht sich aber auf die Verarbeitung von Bilddaten beziehungsweise die Kamera 10 selbst, so dass dieses Beispiel ebenso wie die Anwendung Codelesen nicht einschränkend verstanden werden darf.

Die Kamera 10 erfasst mit einem Bildsensor 24 Bilddaten der geförderten Objekte 14 und der Codes 20, die von einer Steuer- und Auswertungseinheit 26 mittels Bildauswertung, im Falle des Codelesens einschließlich eines Decodierverfahrens, weiterverarbeitet werden. Die Steuer- und Auswertungseinheit 26 wird sogleich unter Bezugnahme auf die Figur 2 näher beschrieben. Über eine Schnittstelle 28 gibt die Kamera 10 Informationen aus, wie Bilddaten möglicherweise mit verschiedenen Verarbeitungsstufen oder gelesene Codes.

Figur 2 zeigt die Steuer- und Auswertungseinheit 26 und ihre Anbindung in einer schematischen Darstellung. Diese Darstellung zeigt eine vorteilhafte Ausführungsform, allgemein kann eine Steuer- und Auswertungseinheit 26 beliebiger interner Struktur die Bilddaten des Bildsensors 24 auslesen und in der noch zu beschreibenden Weise verarbeiten. Die Steuer- und Auswertungseinheit 26 in der bevorzugten Ausführungsform gemäß Figur 2 umfasst eine erste Verarbeitungseinheit 30, die im Folgenden am Beispiel eines FPGA (Field Programmable Gate Array) sowie eine zweite Verarbeitungseinheit 32, die im Folgenden am Beispiel eines Mikroprozessors oder einer CPU (Central Processing Unit) erläutert wird. Die zweite Verarbeitungseinheit 32 weist vorzugsweise einen Decoder 36 zum Auslesen von optischen Codes anhand von Bilddaten auf.

Die erste Verarbeitungseinheit 30 ist einerseits mit dem Bildsensor 24 verbunden und weist andererseits eine Schnittstelle in Richtung der zweiten Verarbeitungseinheit 32 auf, vorzugsweise eine Hochgeschwindigkeitsschnittstelle (PCI, PCIE, MIPI). Beide Verarbeitungseinheiten 30, 32 können auf einen Speicher 34 für Bilddaten und Zusatzinformationen, Metadaten oder Verarbeitungsergebnisse zugreifen. Die entsprechenden Lese- und Schreibvorgänge erfolgen vorzugsweise mittels DMA (Direct Memory Access). Der Speicher 34 lässt sich mindestens funktional, je nach Ausführungsform auch strukturell als Teil der zweiten Verarbeitungseinheit 32 auffassen.

Im Betrieb nimmt nun der Bildsensor 24 jeweils ein neues Bild oder einen neuen Bildabschnitt auf. Das kann ein rechteckiges Bild eines Matrixsensors sein, es sind aber auch einzelne oder mehrere Bildzeilen eines Zeilensensors vorstellbar, die dann sukzessive im Verlauf der Relativbewegung zwischen Kamera 10 und Objekt 14 ein Gesamtbild ergeben. Die Bilddaten des Bildsensors 24 werden von der ersten Verarbeitungseinheit 30 ausgelesen und in den Speicher 34 übertragen oder gestreamt. Dabei werden vorzugsweise zugleich Zusatzinformationen oder Metadaten bestimmt, und zwar vorteilhafterweise "on-the-fly", d.h. direkt beim Übertragen in den Speicher 34 und noch während weitere Bilddaten des Bildes von dem Bildsensor 24 einzulesen sind beziehungsweise eingelesen werden. Die Metadaten können verschiedene Vorverarbeitungen betreffen, die hier nicht näher beschrieben werden. Denn im Zusammenhang mit der Erfindung ist insbesondere das Unterteilen eines Bildes in Kacheln und Bestimmen von Helligkeitsverteilungen zu den Kacheln und möglicherweise das Auffinden interessierender Bereiche eines Bildes beispielsweise mit Codes 20 von Interesse. Das Bestimmen der interessierenden Bereiche kann alternativ in der zweiten Verarbeitungseinheit 32 erfolgen.

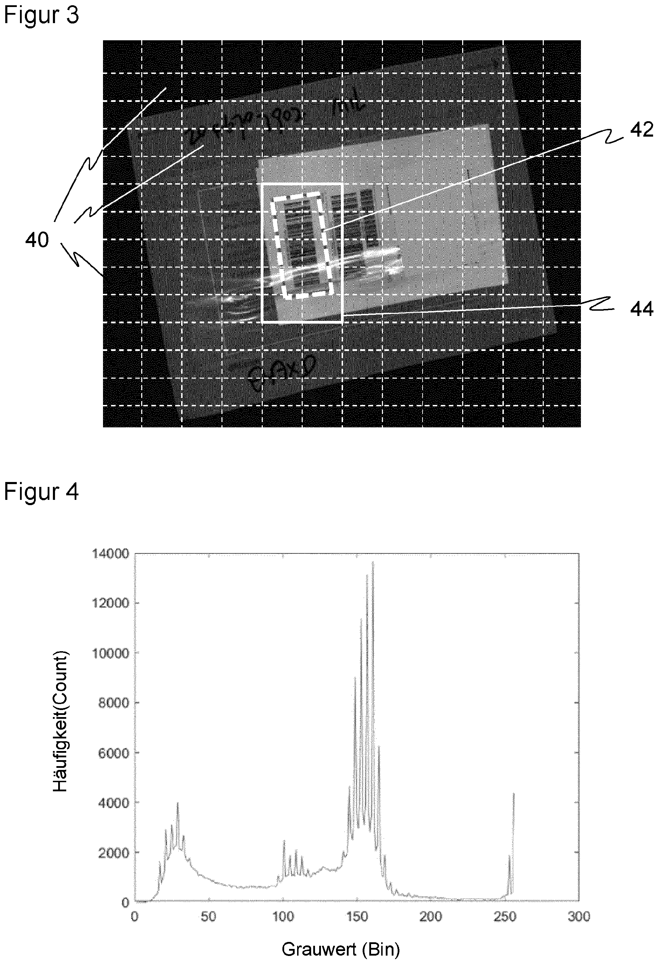

Diese Aufgaben oder Verarbeitungsschritte werden später unter Bezugnahme auf die Figuren 3 und 4 näher erläutert.

Die zweite Verarbeitungseinheit 32 greift auf die Bilddaten in dem Speicher 34 zu, um sie weiter zu verarbeiten. Besonders bevorzugt liest ein Decoder 36 der zweiten Verarbeitungseinheit 32 den Inhalt der mit den Bilddaten aufgenommenen optischen Codes 20 aus. Die zweite Verarbeitungseinheit 32 ist zudem in der Lage, von der ersten Verarbeitungseinheit 30 in dem Speicher 34 abgelegte Metadaten auszuwerten. Insbesondere kann auf diese Weise eine Nachschlagtabelle 38 (LUT, LookUp Table) für eine Helligkeitsanpassung oder Kontrastspreizung erzeugt werden, die in dem Speicher 34 abgelegt wird. Die Helligkeitsanpassung betrifft einen interessierenden Bereich des Bildes und erfolgt anhand der zuvor bestimmten Helligkeitsverteilungen zu den Kacheln. Auch das wird sogleich unter Bezugnahme auf die Figuren 3 und 4 näher erläutert. Metadaten können auch herangezogen werden, um interessierende Bereiche aufzufinden, wobei interessierende Bereiche alternativ auf ganz andere Weise bestimmt werden können, etwa anhand eines externen Sensors wie eines Laserscanners, der die Geometrie vermisst und so die Objekte 14 vor ihrem Hintergrund erkennt. Die Auswertung von Metadaten kann zumindest teilweise bereits in der ersten Verarbeitungseinheit 30 erfolgen, aus diesem Grund der verschiedenen möglichen Aufgabenverteilungen ist dieser Verarbeitungsschritt in Figur 2 jeweils eingeklammert.

Figur 3 zeigt ein Beispielbild mit optischen Codes, wie es von der Kamera 10 aufgenommen wird. Das Bild wird in Kacheln 40 unterteilt, vorzugsweise wie dargestellt in einem gleichmäßigen Raster von n x m Pixeln, wobei n und m so vorgegeben sind, dass eine Vielzahl von Kacheln je Zeile und Spalte entsteht. Zu jeder Kachel 40 können Metadaten bestimmt werden, beispielsweise Mittelwert oder Varianz, anhand derer beurteilt werden kann, ob die jeweilige Kachel 40 eine interessante Struktur wie einen optischen Code enthält. Für die erfindungsgemäße Helligkeitsanpassung wird zu den Kacheln 40 eine jeweilige Helligkeitsverteilung bestimmt, insbesondere in Form eines Histogramms, das die möglichen Grauwerte in Bins bündelt und in den Bins zählt, wie viele Pixel mit dem Grauwert oder den Grauwerten des Bins in einer Kachel 40 vorkommen. Wie zu Figur 2 erläutert, sind solche Verarbeitungsschritte on-the-fly während des Streamens möglich. Es ist prinzipiell denkbar, nur eine Stichprobe der Pixel in die Helligkeitsverteilung einzubeziehen, um den Aufwand zu reduzieren, vorzugsweise tragen jedoch zumindest nahezu alle Pixel bei, um eine aussagekräftige Helligkeitsverteilung zu erhalten.

Unabhängig von der Unterteilung in Kacheln 40 wird in dem Bild nach interessierenden Bereichen 42 gesucht, in diesem Fall solche mit einem optischen Code. Die Unterteilung in Kacheln 40 mit Bestimmung von jeweiligen Helligkeitsverteilungen und die Suche nach interessierenden Bereichen 42 kann parallel zueinander erfolgen, da das Auffinden interessierender Bereiche 42 auf noch nicht helligkeitsangepassten Bilddaten basieren kann. Es ist aber trotzdem denkbar, das Auffinden von interessierenden Bereichen 42 erst im Nachgang in der zweiten Verarbeitungseinheit 32 vorzunehmen. Die Suche nach interessierenden Bereichen 42 kann die im Vorabsatz angesprochenen Metadaten nutzen, es sind aber auch andere Segmentierungen bekannt. Es hängt von dem Bild ab, ob es einen oder mehrere solcher interessierender Bereiche 42 oder womöglich gar keinen interessierenden Bereich 42 gibt, etwa weil das Bild keine optischen Codes enthält. In dem Beispielbild von Figur 3 sind noch weitere optische Codes erkennbar, die der Übersichtlichkeit halber nicht gekennzeichnet sind.

In Kenntnis des interessierenden Bereichs 42 werden zugehörige Kacheln 40 bestimmt. Eine entsprechende Auswahl 44 von Kacheln 40 überdeckt den interessierenden Bereich 42. Dabei ist zu entscheiden, wie mit Kacheln in Randlage 42 umgegangen wird. In dem Beispiel der Figur 3 umfasst die Auswahl 44 alle Kacheln 40, die irgendwie mit dem interessierenden Bereich überlappen. Es ist alternativ denkbar, Kacheln 40 am Rand zumindest teilweise auszuschließen. Dafür kann ein Mindestanteil, etwa ein prozentualer Schwellenwert p%, der Überlappung gefordert werden, und nur Kacheln mit mindestens dieser Überlappung werden in die Auswahl 44 aufgenommen. Beispielweise würden bei einem Schwellenwert von 50% die beiden unteren Kacheln 40 und möglicherweise noch mehr Kacheln 40 aus der Auswahl 44 herausfallen. Die Darstellung entspricht einem kleinen Schwellenwert von unter 10%.

Aus den einzelnen Helligkeitsverteilungen zu den Kacheln 40 der Auswahl 44 kann nun durch deren Kombination eine gemeinsame Helligkeitsverteilung des interessierenden Bereichs 42 bestimmt werden. In einer Repräsentation als Histogramm müssen dabei einfach die Counts aufaddiert werden. Die Kombination ist wenig rechenaufwändig, ein Zugriff auf einzelne Pixel ist dafür nicht mehr erforderlich. Die gemeinsame Helligkeitsverteilung passt nicht exakt zu dem interessierenden Bereich 42, da die Kacheln 40 in aller Regel wegen der genannten Randeffekte nicht genau den interessierenden Bereich 42 überdecken, ist aber eine sehr gute Approximation.

Figur 4 zeigt eine beispielhafte Helligkeitsverteilung in Form eines Histogramms. Auf der X-Achse sind dabei die Bins der möglichen Grauwerte und auf der Y-Achse die zugehörigen Counts dargestellt. Es handelt sich hier um eine gemeinsame Helligkeitsverteilung, die Helligkeitsverteilung einer einzelnen Kachel 40 sähe aber ganz ähnlich aus, sie enthielte lediglich weniger Counts, da üblicherweise ein interessierender Bereich 42 aus mehreren Kacheln 40 zusammengesetzt ist. In diesem Beispiel sind die Grauwerte in 8 Bit aufgelöst, und die Binbreite entspricht einer maximalen Auslösung von Eins, es gibt also 256 Bins. Alternativ können die Bins mehrere Grauwerte zusammenfassen, beispielsweise in 64 Bins der Breite vier entsprechend einer 6-Bit-Grauwertauflösung, wodurch sich die Counts erhöhen würden. Es werden für die Helligkeitsanpassung keine weiteren Metadaten über die gemeinsame Helligkeitsverteilung hinaus benötigt, die aus den einzelnen Helligkeitsverteilungen zu den Kacheln 40 der Auswahl 44 kombiniert ist.

Für die Kontrastspreizung wird das Histogramm analysiert. In einer einfachen Ausführungsform wird lediglich der kleinste und größte vorkommende Helligkeitswert bestimmt, d.h. das kleinste und größte Bin mit Count ungleich Null. Dabei kann noch das obere und untere Ende des Histogramms abgeschnitten werden, typischerweise 10%-20% oder 15%-20% des Histogramms. Dadurch wird Rauschen im dunklen beziehungsweise Glanz im hellen Bereich eliminiert. Weiterhin ist denkbar, für das kleinste beziehungsweise größte besetzte Bin einen Mindestwert, beispielsweise von zwei bis zehn, zu fordern statt nur einen Count ungleich Null, damit nicht einzelne Ausreißer unter den Pixeln die Kontrastspreizung verzerren. Eine besonders einfache alternative Ausführungsform wählt einfach unabhängig von der Besetzung der Bins einen dunklen und hellen Wert entsprechend 80%-90%, 85%-90% oder einem anderen vorgegebenen Anteil des Histogramms. Das Ergebnis der jeweiligen Auswertung ist eine Spanne [MinGrau, MaxGrau] von tatsächlich vorkommenden (relevanten) Grauwerten.

In einer etwas aufwändigeren Analyse werden Maxima oder Peaks in dem Histogramm bestimmt. In Figur 4 gibt es Peaks bei den Grauwerten 35, 110, 160 und 255. Vor der Bestimmung von Peaks kann das Histogramm geglättet werden, etwa mit einem Gaussfilter. Bei einem optischen Code sollte es einen Peak für helle und einen Peak für dunkle Codebereiche geben. Deshalb werden die beiden ausgeprägtesten Peaks bestimmt. Der Peak um 255 deutet auf Glanz hin und kann verworfen werden, wobei vorzugsweise die zusätzliche Bedingung geprüft wird, dass dennoch zwei Peaks bei 35 und 160 verbleiben. Auch hier resultiert eine Spanne [MinGrau, MaxGrau], die bei [35, 160] festgelegt werden kann. Alternativ werden beide Grenzen noch etwas verschoben, beispielsweise um die Peaks in ihrer Gesamtheit einzuschließen oder um eine Auswertung gemäß Vorabsatz mit zu berücksichtigen.

Die somit bekannte tatsächliche Spanne [MinGrau, MaxGrau] wird nun auf den gesamten Grauwertebereich von beispielsweise [0, 255] bei 8-Bit-Grauwertauflösung oder einen künstlich etwas kleiner gewählten Bereich [i, 255-j] gespreizt, mit i, j kleine natürliche Zahlen. Entsprechend können in einer Helligkeitsanpassung oder Kontrastspreizung die Grauwerte der Pixel in dem interessierenden Bereich 42 insbesondere linear reskaliert werden.

Die Umrechnung erfolgt besonders bevorzugt durch Erzeugen einer Nachschlagtabelle 38 (LUT, LookUp Table). Darin kann für jeden tatsächlichen Grauwert des ursprünglichen Bildes unmittelbar der zugehörige helligkeitsangepasste Grauwert ausgelesen werden. Wenn nun die zweite Verarbeitungseinheit 32 oder deren Decoder 36 Bildinhalte lädt, d.h. auf Pixel des interessierenden Bereichs 42 zugreift, so kann dies über die Nachschlagtabelle 38 erfolgen. Somit wird nach dem Streamen mit Vorverarbeitung durch die erste Verarbeitungseinheit 30 erst für die eigentliche nachgelagerte Bildverarbeitung und insbesondere das Lesen von Codes wieder auf einzelne Pixel zugegriffen. Deren Helligkeitswerte sind dabei mit minimalem Aufwand der Indirektion über die Nachschlagtabelle bereits helligkeitsangepasst beziehungsweise kontrastgespreizt.

## Patentansprüche

1. Kameravorrichtung (10) mit einem Bildsensor (24) zum Aufnehmen eines Bildes und mit einer Steuer- und Auswertungseinheit (26), die dafür ausgebildet ist, das Bild unabhängig vom Bildinhalt in erste Teilbereiche (40) einer vorgegebenen Position und Geometrie zu unterteilen, in dem Bild einen zweiten Teilbereich (42) mit interessierenden Strukturen aufzufinden und eine Helligkeitsanpassung des Bildes vorzunehmen,
**dadurch gekennzeichnet,**
**dass** die Steuer- und Auswertungseinheit (26) weiterhin dafür ausgebildet ist, zu den ersten Teilbereichen (40) eine jeweilige Helligkeitsverteilung zu bestimmen,
eine Auswahl (44) derjenigen ersten Teilbereiche (40) zu ermitteln, die zu einem vorgegebenen Mindestanteil mit dem zweiten Teilbereich (42) überlappen, die Helligkeitsverteilungen der ersten Teilbereiche (40) der Auswahl (44) zu einer gemeinsamen Helligkeitsverteilung des zweiten Teilbereichs (42) zu kombinieren, so dass eine gemeinsame Helligkeitsverteilung des zweiten Teilbereichs entsteht, in der die jeweiligen Häufigkeiten der Helligkeitsverteilungen der ersten Teilbereiche (40) der Auswahl (44) kumuliert sind,
und mit der gemeinsamen Helligkeitsverteilung die Helligkeitsanpassung für den zweiten Teilbereich (42) vorzunehmen.

2. Kameravorrichtung (10) nach Anspruch 1,
wobei die Steuer- und Auswertungseinheit (26) dafür ausgebildet ist, parallel jeweilige Helligkeitsverteilungen zu den ersten Teilbereichen (40) zu bestimmen und einen zweiten Teilbereich (42) mit interessierenden Strukturen aufzufinden.

3. Kameravorrichtung (10) nach einem der vorhergehenden Ansprüche,
wobei die Steuer- und Auswertungseinheit (26) dafür ausgebildet ist, die Helligkeitsverteilungen zu den ersten Teilbereichen (40) als Histogramme zu ermitteln, insbesondere zum Erzeugen der gemeinsamen Helligkeitsverteilung ein gemeinsames Histogramm als Summe der Histogramme zu der Auswahl (44) der ersten Teilbereiche (40) zu bilden.

4. Kameravorrichtung (10) nach einem der vorhergehenden Ansprüche,
wobei die Steuer- und Auswertungseinheit (26) dafür ausgebildet ist, zur Helligkeitsanpassung eine Spanne von Helligkeiten der gemeinsamen Helligkeitsverteilung auf eine größere Spanne möglicher Helligkeitswerte des Bildes aufzuspreizen, insbesondere durch lineares Reskalieren der Helligkeitswerte.

5. Kameravorrichtung (10) nach Anspruch 4,
wobei die Steuer- und Auswertungseinheit (26) dafür ausgebildet ist, die Spanne von Helligkeiten der gemeinsamen Helligkeitsverteilung anhand eines kleinsten und größten vorkommenden Helligkeitswerts der Helligkeitsverteilung zu bestimmen und/oder die Spanne von Helligkeiten der gemeinsamen Helligkeitsverteilung anhand von Maxima der Helligkeitsverteilung zu bestimmen.

6. Kameravorrichtung (10) nach einem der vorhergehenden Ansprüche,
wobei die Steuer- und Auswertungseinheit (26) eine erste Verarbeitungseinheit (30) aufweist, insbesondere ein FPGA (Field Programmable Gate Array), die für die Unterteilung des Bildes in erste Teilbereiche (40) und die Bestimmung der jeweiligen Helligkeitsverteilungen zu den ersten Teilbereichen (40) zuständig ist.

7. Kameravorrichtung (10) nach Anspruch 6,
die einen Speicher (34) zum Ablegen von Bilddaten aufweist, wobei die erste Verarbeitungseinheit (30) zum Übertragen von Bilddaten des Bildes von dem Bildsensor (24) in den Speicher (34) in einem Bilddatenstrom ausgebildet ist.

8. Kameravorrichtung (10) nach Anspruch 6 oder 7,
wobei die erste Verarbeitungseinheit (30) dafür ausgebildet ist, jeweils von dem Bildsensor (24) eingelesene Bilddaten bei der Übertragung in den Speicher (34) schon zu verarbeiten, noch während weitere Bilddaten von dem Bildsensor (24) eingelesen werden.

9. Kameravorrichtung (10) nach einem der vorhergehenden Ansprüche,
wobei die Steuer- und Auswertungseinheit (26) dafür ausgebildet ist, den Inhalt eines optischen Codes (20) in dem zweiten Teilbereich (42) zu lesen.

10. Kameravorrichtung (10) nach einem der vorhergehenden Ansprüche,
wobei die Steuer- und Auswertungseinheit (26) eine zweite Verarbeitungseinheit (32) aufweist, insbesondere einen Mikroprozessor.

11. Kameravorrichtung (10) nach Anspruch 10,
wobei die zweite Verarbeitungseinheit (32) dafür ausgebildet ist, die helligkeitsangepassten Bilddaten des zweiten Teilbereichs (42) zu verarbeiten, insbesondere den Inhalt optischer Codes (20) in dem zweiten Teilbereich (42) zu lesen.

12. Kameravorrichtung (10) nach einem der vorhergehenden Ansprüche,
wobei die Steuer- und Auswertungseinheit (26) dafür ausgebildet ist, anhand der gemeinsamen Helligkeitsverteilung eine Nachschlagtabelle (38) für die Helligkeitsanpassung zu erzeugen, die ursprünglichen Helligkeitswerten angepasste Helligkeitswerte zuordnet.

13. Kameravorrichtung (10) nach Anspruch 11 und 12,
wobei die zweite Verarbeitungseinheit (32) dafür ausgebildet ist, Bilddaten des zweiten Teilbereichs (42) über die Nachschlagtabelle (38) einzulesen.

14. Verfahren zum Aufnehmen und zur Helligkeitsanpassung eines Bildes, bei dem das aufgenommene Bild unabhängig vom Bildinhalt in erste Teilbereiche (40) einer vorgegebenen Position und Geometrie unterteilt und in dem Bild ein zweiter Teilbereich (42) mit interessierenden Strukturen aufgefunden wird,
**dadurch gekennzeichnet,**
**dass** zu den ersten Teilbereichen (40) eine jeweilige Helligkeitsverteilung bestimmt wird,
**dass** eine Auswahl (44) derjenigen ersten Teilbereiche (40) ermittelt wird, die zu einem vorgegebenen Mindestanteil mit dem zweiten Teilbereich (42) überlappen,
**dass** die Helligkeitsverteilungen der ersten Teilbereiche (40) der Auswahl (44) zu einer gemeinsamen Helligkeitsverteilung des zweiten Teilbereichs (42) kombiniert werden, so dass eine gemeinsame Helligkeitsverteilung des zweiten Teilbereichs entsteht, in der die jeweiligen Häufigkeiten der Helligkeitsverteilungen der ersten Teilbereiche (40) der Auswahl (44) kumuliert sind,
und **dass** mit der gemeinsamen Helligkeitsverteilung die Helligkeitsanpassung für den zweiten Teilbereich (42) vorgenommen wird.

## Claims

1. A camera device (10) having an image sensor (24) for recording an image and having a control and evaluation unit (26) configured to divide the image into first subregions (40) of a predetermined position and geometry independently of the image content, to locate a second subregion (42) with structures of interest in the image and to carry out a brightness adjustment of the image,
**characterized in that** the control and evaluation unit (26) is furthermore configured to determine a respective brightness distribution for the first subregions (40),
to determine a selection (44) of those first subregions (40) which overlap with the second subregion (42) to a predetermined minimum extent,
to combine the brightness distributions of the first subregions (40) of the selection (44) to form a common brightness distribution of the second subregion (42), so that a common brightness distribution of the second subregion is generated in which the respective frequencies of the brightness distributions of the first subregions (40) of the selection (44) are cumulated,
and to use the common brightness distribution to perform the brightness adjustment for the second subregion (42).

2. The camera device (10) according to claim 1,
wherein the control and evaluation unit (26) is configured to determine respective brightness distributions for the first subregions (40) and to locate a second subregion (42) with structures of interest in parallel.

3. The camera device (10) according to any of the preceding claims,
wherein the control and evaluation unit (26) is configured to determine the brightness distributions for the first subregions (40) as histograms, in particular to form a common histogram as the sum of the histograms for the selection (44) of the first subregions (40) in order to generate the common brightness distribution.

4. The camera device (10) according to any of the preceding claims,
wherein the control and evaluation unit (26) is configured to spread a range of brightnesses of the common brightness distribution to a larger range of possible brightness values of the image for brightness adjustment, in particular by linear rescaling of the brightness values.

5. The camera device (10) according to claim 4,
wherein the control and evaluation unit (26) is configured to determine the range of brightnesses of the common brightness distribution on the basis of a smallest and largest occurring brightness value of the brightness distribution and/or to determine the range of brightnesses of the common brightness distribution on the basis of maxima of the brightness distribution.

6. The camera device (10) according to any of the preceding claims,
wherein the control and evaluation unit (26) comprises a first processing unit (30), in particular an FPGA (Field Programmable Gate Array), which is responsible for dividing the image into first subregions (40) and for determining the respective brightness distributions for the first subregions (40).

7. The camera apparatus (10) according to claim 6,
comprising a memory (34) for storing image data, wherein the first processing unit (30) is configured to transfer image data of the image from the image sensor (24) to the memory (34) in an image data stream.

8. The camera device (10) according to claim 6 or 7,
wherein the first processing unit (30) is configured to process image data read in from the image sensor (24) during transmission to the memory (34) while further image data is still being read in from the image sensor (24).

9. The camera device (10) according to any of the preceding claims,
wherein the control and evaluation unit (26) is configured to read the content of an optical code (20) in the second subregion (42).

10. The camera device (10) according to any of the preceding claims,
wherein the control and evaluation unit (26) comprises a second processing unit (32), in particular a microprocessor.

11. The camera device (10) according to claim 10,
wherein the second processing unit (32) is configured to process the brightness-adjusted image data of the second subregion (42), in particular to read the content of optical codes (20) in the second subregion (42).

12. The camera device (10) according to any of the preceding claims,
wherein the control and evaluation unit (26) is configured to generate a look-up table (38) for the brightness adjustment on the basis of the common brightness distribution, which assigns adjusted brightness values to original brightness values.

13. The camera device (10) according to claims 11 and 12,
wherein the second processing unit (32) is configured to read in image data of the second subregion (42) via the look-up table (38).

14. A method for recording and adjusting the brightness of an image, wherein the recorded image is divided into first subregions (40) of a predetermined position and geometry independently of the image content and a second subregion (42) with structures of interest is found in the image,
**characterized in that** a respective brightness distribution is determined for the first subregions (40),
**in that** a selection (44) of those first subregions (40) is determined which overlap to a predetermined minimum extent with the second subregion (42),
**in that** the brightness distributions of the first subregions (40) of the selection (44) are combined to form a common brightness distribution of the second subregion (42), so that a common brightness distribution of the second subregion is generated, in which the respective frequencies of the brightness distributions of the first subregions (40) of the selection (44) are cumulated,
and **in that** the brightness adjustment for the second subregion (42) is carried out with the common brightness distribution.

## Revendications

1. Dispositif de caméra (10) comprenant un capteur d'image (24), destiné à enregistrer une image, et une unité de commande et d'évaluation (26) conçue pour subdiviser l'image, indépendamment du contenu de l'image, en premières zones partielles (40) à position et géométrie données, pour trouver dans l'image une deuxième zone partielle (42) ayant des structures d'intérêt, et pour effectuer une adaptation de la luminosité de l'image, **caractérisé en ce que**
l'unité de commande et d'évaluation (26) est en outre conçue pour définir une distribution de luminosités respective relatives aux premières zones partielles (40),
déterminer une sélection (44) des premières zones partielles (40) qui, pour une proportion minimale donnée, chevauchent la deuxième zone partielle (42),
combiner les distributions de luminosités des premières zones partielles (40) de la sélection (44) en une distribution de luminosités commune de la deuxième zone partielle (42), de manière à obtenir une distribution de luminosités commune de la deuxième zone partielle, dans laquelle les fréquences respectives des distributions de luminosités des premières zones partielles (40) de la sélection (44) sont cumulées,
et effectuer l'adaptation de la luminosité pour la deuxième zone partielle (40) avec la distribution de luminosités commune.

2. Dispositif de caméra (10) selon la revendication 1,
dans lequel l'unité de commande et d'évaluation (26) est conçue pour déterminer en parallèle des distributions de luminosités respectives relatives aux premières zones partielles (40) et pour trouver une deuxième zone partielle (42) ayant des structures d'intérêt.

3. Dispositif de caméra (10) selon l'une des revendications précédentes, dans lequel l'unité de commande et d'évaluation (26) est conçue pour déterminer les distributions de luminosités relatives aux premières zones partielles (40) en tant qu'histogrammes, en particulier pour former un histogramme commun en tant que somme des histogrammes relatifs à la sélection (44) des premières zones partielles (40), afin de générer la distribution de luminosités commune.

4. Dispositif de caméra (10) selon l'une des revendications précédentes, dans lequel, pour l'adaptation de la luminosité, l'unité de commande et d'évaluation (26) est conçue pour étaler une plage de luminosités de la distribution de luminosités commune sur une plage plus grande de valeurs de luminosité possibles de l'image, en particulier par une remise à l'échelle linéaire des valeurs de luminosité.

5. Dispositif de caméra (10) selon la revendication 4,
dans lequel l'unité de commande et d'évaluation (26) est conçue pour définir la plage de luminosités de la distribution de luminosités commune à l'aide de valeurs de luminosité présentes minimale et maximale de la distribution de luminosités, et/ou pour définir la plage de luminosités de la distribution de luminosités commune à l'aide des maximas de la distribution de luminosités.

6. Dispositif de caméra (10) selon l'une des revendications précédentes, dans lequel l'unité de commande et d'évaluation (26) comprend une première unité de traitement (30), en particulier un FPGA (Field Programmable Gate Array), qui est responsable de la subdivision de l'image en premières zones partielles (40) et de la définition des distributions de luminosités respectives relatives aux premières zones partielles (40).

7. Dispositif de caméra (10) selon la revendication 6,
comprenant une mémoire (34) destinée à stocker des données d'image, la première unité de traitement (30) étant conçue pour transmettre à la mémoire (34) les données de l'image du capteur d'image (24) dans un flux de données d'image.

8. Dispositif de caméra (10) selon la revendication 6 ou 7,
dans lequel la première unité de traitement (30) est conçue pour déjà traiter les données d'image respectives, lues par le capteur d'image (24), lors de leur transmission vers la mémoire (34), pendant que d'autres données d'image sont encore en train d'être lues par le capteur d'image (24).

9. Dispositif de caméra (10) selon l'une des revendications précédentes, dans lequel l'unité de commande et d'évaluation (26) est conçue pour lire le contenu d'un code optique (20) dans la deuxième zone partielle (42).

10. Dispositif de caméra (10) selon l'une des revendications précédentes, dans lequel l'unité de commande et d'évaluation (26) comprend une deuxième unité de traitement (32), en particulier un microprocesseur.

11. Dispositif de caméra (10) selon la revendication 10,
dans lequel la deuxième unité de traitement (32) est conçue pour traiter les données d'image, adaptées quant à la luminosité, de la deuxième zone partielle (42), en particulier pour lire le contenu de codes optiques (20) dans la deuxième zone partielle (42).

12. Dispositif de caméra (10) selon l'une des revendications précédentes, dans lequel l'unité de commande et d'évaluation (26) est conçue pour générer, à l'aide de la distribution de luminosités commune, une table de consultation (38) pour l'adaptation de la luminosité, qui associe des valeurs de luminosité adaptées à des valeurs de luminosité initiales.

13. Dispositif de caméra (10) selon les revendications 11 et 12,
dans lequel la deuxième unité de traitement (32) est conçue pour lire des données d'image de la deuxième zone partielle (42) via la table de consultation (38).

14. Procédé d'enregistrement et d'adaptation de la luminosité d'une image, dans lequel l'image enregistrée est subdivisée, indépendamment du contenu de l'image, en premières zones partielles (40) à position et géométrie données, et une deuxième zone partielle (42) ayant des structures d'intérêt est trouvée dans l'image,
**caractérisé en ce que**
une distribution de luminosités respective est définie pour les premières zones partielles (40),
**en ce qu'**une sélection (44) des premières zones partielles (40) qui, à une proportion minimale donnée, chevauchent la deuxième zone partielle (42) est déterminée,
**en ce que** les distributions de luminosités des premières zones partielles (40) de la sélection (44) sont combinées en une distribution de luminosités commune de la deuxième zone partielle (42), de manière à obtenir une distribution de luminosités commune de la deuxième zone partielle, dans laquelle les fréquences respectives des distributions de luminosités des premières zones partielles (40) de la sélection (44) sont cumulées,
et **en ce que** l'adaptation de la luminosité pour la deuxième zone partielle (40) est effectuée avec la distribution de luminosités commune.
